(19) Europäisches Patentamt
European Patent Office
Office européen des brevets

(11) **EP 4 769 335 A1**

(12) **EUROPEAN PATENT APPLICATION**

(43) Date of publication:
01.07.2026 Bulletin 2026/27

(21) Application number: 25227807.2

(22) Date of filing: 30.12.2025

(51) International Patent Classification (IPC):
**G06V 10/82** (2022.01)   **G06V 20/40** (2022.01)
**G06V 40/20** (2022.01)

(52) Cooperative Patent Classification (CPC):
**G06V 40/23; G06V 10/82; G06V 20/42**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 30.12.2024 US 202463740304 P

(71) Applicant: **Drive Hockey Analytics Inc**
**Coquitlam, BC V3B 6S2 (CA)**

(72) Inventors:
• **Akella, Krishant**
 **Qoquitlam, V3B 6S2 (CA)**
• **Johnson, Ron**
 **Qoquitlam, V3B 6S2 (CA)**
• **Dahlstedt, Mike**
 **Qoquitlam, V3B 6S2 (CA)**

(74) Representative: **Münzer, Marc Eric**
**Aalborg Patent ApS**
**Algade 38, 3**
**9000 Aalborg (DK)**

(54) **SYSTEMS, DEVICES, ARTICLES AND METHODS FOR DETERMINING BALL LOCATION BASED ON PLAYER LOCATION DATA**

(57) Embodiments of the present disclosure relate to systems, devices, articles and methods for determining ball location based on player location data. The system includes a local system, a cloud computing system and a remote system. The system collects location data of players during a tracked event, refines and pre-pro-cesses the data which is used to train a machine learning model which determines the region of the ball. Embodiments further include methods to determine ball possession. The ball region and possession data can be used to determine the ball location throughout an event and analyze ball possession.

FIG. 10

EP 4 769 335 A1

# Description

## Technical Field

The present disclosure relates to determining ball location during a sports event based on player movements. More specifically, the present disclosure is related to computing the puck/ball location by measuring positional data of a set of athletes with the use of position sensors.

## Background

Over the past several years, the use of data in sports has risen in popularity as a means to make better evaluation, development and tactical decisions, as well as for purposes such as to enhance fan experience through deeper insights and gaming. As the usefulness of data continues to grow, there is a need to capture greater detailed insights and accuracy. For example, identifying the location of the puck during an ice hockey game to recreate its trajectory by measuring the positional data of the players can enable accurate determination of puck possession, type of event as well as valuable insight such as proper technique when in close proximity to the puck provide a means for the athletes to develop a better technique with less reliance on expert trainers.

Some systems are available for tracking a ball/puck. For example, balls/pucks equipped with a position sensor may be used to identify its location. However, traceable balls/pucks are more expensive than the traditional balls/pucks and therefore are not a logical option for amateur or minor teams/leagues. Another option is to use video footage of the game/tracked event to track the ball/puck. A major disadvantage of video data is that processing the data requires a system with higher memory capacity and higher processing power. Furthermore, there may be instances when the ball/puck is hidden from camera view even with multiple video cameras installed, especially in fast-paced games such as ice/ball hockey, lacrosse, etc. Therefore, video data alone may not be able to accurately track the ball/puck throughout the entire game/tracked event.

Particularly relevant to tracking an object such as a ball/puck are systems that can estimate the position of the object during a tracked event. International Publication No. WO 2023/283716 A1 discloses measuring player's location and using an artificial neural network to process data and predict the location of the ball as well as measure the player performance when a player is in possession of the ball. However, the ball position is estimated using video footage of which, as previously mentioned, consumes significant memory and proposing power and poses limitations such as the ball/puck being obstructed from view especially when the ball/puck is being crowded by players. U.S. Patent No. 10,956,723 B2 discloses a method of evaluating a player's actions during a sporting event (e.g., shooting, dribbling and/or passing) using a neural network to predict outcomes. Different types of sensors are used to track an object such as a ball/puck to determine player performance during a particular scenario such as a shot. However, such systems provide little basis to trace a puck during the entire game by only using positional data of players.

The present disclosure may improve existing systems by measuring positional data of players in the same sporting event and applying the data to a machine learning model such as a neural network to determine the region/zone of the ball/puck during the event. Therefore, the present disclosure is able to track a puck/ball without directly tracking it.

By accurately mapping the ball/puck location to a region of the play area at each period of time during a sports event, an estimation of the trajectory of the puck/-ball can be obtained using the location data of the players rather than limiting to tactical insights that is collected from current sports tracking data systems.

## Summary

This section is intended to introduce certain objectives and aspects of the present disclosure in a simplified manner. A method of estimating a projectile's location in a sport comprising: logically dividing a sports field into multiple regions; track player position within the sports field; calculate a set of features based on distances between player locations; using a neural network, input with the set of features, to calculating probabilities of the projectile being located within each of the regions; and selecting one of the region as containing the projectile based on the calculated probabilities.

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions. One general aspect includes a method of estimating a sports projectile's location in a sports field. The method also includes logically dividing the sports field into multiple regions; track player locations within the sports field; calculate a set of features based on player locations; using a neural network, input with the set of features, to calculating probabilities of the sports projectile being located within each of the regions; estimating one of the regions as containing the projectile based on the calculated probabilities; and repeating the steps of calculating probabilities and estimating regions and then storing estimated regions in a datastore for a series of timestamps. Other embodiments of this aspect include corresponding computer systems, apparatus, and computer programs recorded on one or more computer storage devices, each configured to perform the actions of the methods.

Implementations may include one or more of the following features. The method may include preprocessing steps including one or more of: refining players' locations using a Kalman filter, calculating players' speeds and trajectories, building player arrays, removing edge cases of regions, labeling game outcomes, building input feature vectors; and converting to tensors. Features are based on player distances and speeds, and selected from: centroid of player location, player speed, variance of player spread, average distance between players, average player skating trajectory. The method may include neural network is a GNN, CNN, or attention-based model. The method may include outputting the estimated region of the sports projectile to a display. There are at least 30 regions. The region of the sports projectile for a given timestamp is further calculated based on prior and posterior estimated regions. The method may include a trajectory of the sports projectile by fitting lines or splines though the estimated regions for series of the timestamps. The method may include determining which player or team has possession of the sports projectile and using possession as one of the features to the neural net. The method may include calculating statistics from the repeated estimated regions, preferably one of: heat map of estimated regions, projectile dynamics, trends of the sports projection's regions over the course of a game, correlations between estimated regions and outcomes. The size of the regions decreases with distance to a goal of the sports area. The region are stored in a datastore or configured using a user-interface. Implementations of the described techniques may include hardware, a method or process, or computer software on a computer-accessible medium.

One general aspect includes a system for estimating a sports projectile's location in a sports field. The system also includes a tracking system to track player locations within the sports field; a datastore storing a logical division of the sports field into multiple regions, a neural network trained to output probabilities of a sports projectile being located within each of the regions given a set of input features, a computer processor arranged to: calculate a set of features based on player locations, input the set of features to the neural network to calculate probabilities of the sports projectile being located within each of the regions, estimate one of the regions as containing the sports projectile based on the calculated probabilities. The system also includes repeat the steps of calculating probabilities and estimating regions, then store estimated regions for a series of timestamps. Other embodiments of this aspect include corresponding computer systems, apparatus, and computer programs recorded on one or more computer storage devices, each configured to perform the actions of the methods.

Implementations may include one or more of the following features. The system where tracking may include using a video camera capturing the athletes to output a video stream and then a) video processing to automatically identify each player and estimate their locations or b) manually annotating players and their locations. Tracking may include sensors and transceivers worn by each athlete. Implementations of the described techniques may include hardware, a method or process, or computer software on a computer-accessible medium.

**Brief description of the drawings**

Systems, devices, and methods are described in greater detail herein with reference to the following figures in which:

FIG. 1 illustrates a block diagram of the system components in accordance with some embodiments of the invention;

FIG. 2 illustrates a block diagram of the local system of FIG. 1;

FIG. 3 illustrates a block diagram of the cloud computing system of FIG. 1;

FIG. 4 illustrates a block diagram of the central remote system of FIG. 1;

FIG. 5 illustrates a flow diagram of the pre-processing method to determine relative puck region;

FIG. 6 illustrates a block diagram of a neural network to determine relative puck region;

FIG. 7 illustrates region/zone map overlaid on a playing area;

FIG. 8 is a data diagram of output arrays of probabilities.

FIG. 9 and FIG. 10 are visual representations of the relative puck region and player positions in accordance with an embodiment of the invention;

FIG. 11 is a visual representation of relative player positions, and the corresponding puck location determined through player possession identification.

**Detailed Description**

The invention will now be described in detail with reference to the accompanying drawings. Provided are systems and methods of determining, using a machine learning algorithm such as a neural network, the region of ball location during live games using spatial information of the players.

In the following description, associated drawings, included claims, and other parts of the document, various details are set forth to provide a detailed understanding of the disclosure and embodiments thereof. It will be apparent, however, that the disclosed embodiments may be practiced without some of these details. Several features described hereafter can each be used independently of one another or in combination of other features.

Although the system can be used to simultaneously track and process data in almost any real time sporting event, such as (ball, ice, & field) hockey, lacrosse, soccer, American football, basketball, it will be described in this section with regard to one exemplary embodiment for the sport of Ice Hockey.

Embodiments may comprise specific types of sensors to accurately track the location of players over time during a live sporting event. A network of rink antennas captures the sensor data and transfers the data to a computing device that processes the data using mathematical algorithms and outputs refined, standardized location data at any given timestamp. The refined player location data are used to train a machine learning model such as a neural network in order to determine the region of the puck at each time during a tracked event.

In accordance with the present disclosure, the term "timestamp" is described as an instance of time. For example, a timestamp may include the instance of time each data point is recorded or measured. As used herein, the terms "timestamp", "time instance", "instance of time" and the like refer to the same interpretation and may be interchangeably used throughout the specification.

In accordance with the present disclosure, the term "timestep" is described as a period of time. For example, a timestep may include a duration of time when a certain activity (e.g. passing, shooting, skating with puck) or a game scenario occurred. As used herein, the terms "timestep", "time interval", "time period" and the like refer to the same interpretation and may be interchangeably used throughout the specification.

In accordance with the present disclosure, the term "region" is described as a subset within a larger playing area, but much smaller than the general sports areas of offensive zone, neutral zone, and defence zone. Regions may be similar in dimensions or they may be different, whereby regions nearer the goal or special field markings are smaller, thus providing higher resolution in critical areas. Field markings may include face-off circles, painted lines, goal lines, goal creases, lacrosse 'house', and football yard makers. Each region may be adjusted such that there are a higher number of regions within the playing area or a lower number. The machine learning algorithm that determines the region of the ball/puck outputs an array of probabilities corresponding to the defined regions. As used herein, the terms "region", "zone" and like refer to the same interpretation and may be interchangeably used throughout the specification. A region is preferable smaller than 10 $m^2$, more preferably smaller than 6 $m^2$.

In accordance with the present disclosure, the term "player" refers to an athlete participating in a sport such as ice hockey. Therefore, as used herein, the terms "player", "athlete", and like refer to the same interpretation and may be interchangeably used throughout the specification.

In accordance with the present disclosure, the term "outcome" refers to some conclusion to or important event within a window of play, such as a goal, save, penalty, which typically relate to the particular sport involved. Therefore, as used herein, the terms "outcome", "result", and like refer to the same interpretation and may be interchangeably used throughout the specification.

A machine learning model, as described herein, refers to a computational construct comprising a set of algorithmically defined parameters and structures configured to process input data and generate predictive or classificatory outputs. The model may include one or more layers of interconnected nodes or units, each performing mathematical transformations on received data based on learned weights or coefficients. These weights are iteratively optimized during a training phase using a dataset representative of the target domain, thereby enabling the model to generalize from observed patterns and infer outcomes for previously unseen inputs.

In accordance with the present disclosure, the term "neural network" is described as a computational model inspired by the structure and functioning of the human brain, designed to recognize patterns and make predictions or decisions based on data. **It** consists of layers of interconnected units called neurons, with each neuron receiving inputs, processing them using weights, biases, and an activation function, and passing the output to the next layer. A typical neural network includes an input layer where data is fed into the network, at least one hidden layer where processing occurs and an output layer where the final predictions are made. During training, the network learns by adjusting its weights and biases based on the errors in its predictions along with an optimization algorithm.

A neural network is a specialized subset of machine learning. As used herein, the terms "neural network", "neural net" and like refer to the same interpretation and may be interchangeably used throughout the specification.

In accordance with the present disclosure, the term "convergence" in a neural network refers to the process by which the training algorithm minimizes the loss function, reaching a point where further updates to the neural network's parameters produce little to no improvement in performance. This occurs as the optimizer iteratively adjusts the model's weights and biases based on gradients computed from the loss function, progressively reducing the error between predictions and true labels. A model is considered converged when the loss stabilizes, or the improvement becomes negligible over successive iterations (or epochs).

In order for the neural network to reach convergence, a certain criterion has to be met. As previously mentioned, each iteration refines the neural network's parameters (weights and biases) to better predict the target outcomes. For example, a loss function measures the difference between the predicted outputs of a neural network and the actual target values. It quantifies how well (or poorly) the model is performing and guides the optimization process to improve predictions. The goal of training a neural network is to minimize the loss function, which improves the model's accuracy on the task. The choice of loss function depends on the task. The tasks can be categorized as a regression task or a classification task.

A regression task involves predicting a continuous value, where the output is a single real-valued number. For a Regression task, Mean Squared Error (MSE) or Mean Absolute Error (MAE) can be used to compute the loss function. Some preferred embodiments of the present disclosure output a probability distribution over classes where the highest probability is interpreted as the location of the puck at a given time. A classification task assigns each input to one of several discrete categories or classes, such as identifying whether the puck is in a given region or not. For a classification task, Cross-Entropy Loss, Hinge Loss and the like can be used to compute the loss function.

Cross-Entropy Loss measures how well the predicted probability distribution matches the true distribution. For a single data point in a classification task, the Cross-Entropy Loss can be calculated using a mathematical formula. In some embodiments, the calculation can use a sum of a logarithmic formula including a scalar product. For example, the formula can be written as:

$$Cross - Entropy\ Loss\ =\ -\sum_{i=1}^{c} y_i \cdot log(\hat{y}_i)$$

Where $y_i$ is the actual label in which $y_i = 1$ if the data belongs to class $i$, and $y_i = 0$ otherwise. Furthermore, $\hat{y}_i$ is the predicted probability for class i and $log$ is the natural logarithm. For a batch of data, the loss is averaged over all data points. The predicted probability for class i can be calculated by the use of a mathematical function selected from a plurality of mathematical functions including, softmax function, sigmoid function, sparsemax, or Gumbel-softmax and the like. For example, neural networks typically output raw scores called "logits" for each class. These logits can have any value (positive or negative); however, they are not probabilities. In some embodiments, a mathematical function such as a "softmax function" can convert raw scores (logits) into probabilities. For example, the softmax function can use fractions which can be written as:

$$\hat{y}_i\ =\ \frac{e^{z_i}}{\sum_{j=1}^{n} e^{z_j}}$$

Where $z_i$ is the logit for class i. If the predicted probability for the correct class is high, the log term ($log(\hat{y}_i)$) is small, resulting in a small loss. For example, if the probability is one, or in other words 100%, $log(1)$ is zero. Alternatively, if the predicted probability for the correct class is low, the log term ($log(\hat{y}_i)$) becomes large resulting in a high loss. For example, if the probability is zero, $log(0)$ is undefined, or in other words very high. Cross-entropy loss function rewards the neural network for predicting high probabilities for the correct class while penalizing incorrect predictions.

An optimization algorithm in a neural network is a method used to adjust the network's parameters (weights and biases) to minimize the loss function, which quantifies the error between the model's predictions and the actual outcomes. The goal of optimization is to find the set of parameters that reduce the loss, improving the model's performance. Optimization is an iterative process, and the choice of algorithm can impact the efficiency and effectiveness of training a neural network.

An optimization algorithm can be used to minimize the loss calculated by, for example, Cross-Entropy Loss function, which measures the error between the model's predictions and the true labels. The suitable type of optimization algorithm depends on the specific problem, dataset, and computational resources. In some preferred embodiments, an optimization algorithm such as Adaptive Moment Estimation (a.k.a. Adam) is used. Adam optimizer combines the strengths of two other optimizers: Momentum, which smooths updates by considering the moving average of past gradients and Root Mean Square Propagation (RMSProp), which adapts learning rates based on the magnitude of recent gradients for each parameter. Each parameter in the optimization algorithm gets its own learning rate that adjusts dynamically based on the gradients to provide faster convergence and better results in practice.

In other embodiments, optimization algorithms such as Stochastic Gradient Descent (SGD), Adam with Weight Decay (AdamW), Adaptive Gradient Algorithm (AdaGrad) or any other suitable algorithm or a combination of algorithms can be used to minimize loss and achieve fast and stable convergence.

Embodiments may comprise training data that are pre-processed in a cloud computing environment, where datasets are uploaded to secure cloud storage, analyzed using distributed computational frameworks, and processed results are stored or streamed to a central computing device which uses a machine learning model such as a neural network to train the data. In some embodiments, the central computing device is equipped with sufficient computational power, including a Graphical Processing Unit (GPU) and parallel processing, to efficiently train neural networks on the provided dataset. Other embodiments can utilize a cloud computing environment or a local computer to process the machine learning model to train the data, provided that the computer processor(s) have sufficient memory capacity and a GPU to process large amounts of data.

The initial training data can be collected from previously tracked events. For example, the training data can include puck position, player position, rink coordinates as well as velocity and acceleration data collected for tracked events. In some embodiments, the training data can include publicly available datasets of player and puck coordinates. In some other embodiments, the training data can include a combination of data acquired through previously tracked events and other available datasets. A person of skill in the art will appreciate that training a neural network is a stochastic, iterative process which repeatedly performs forward and backward data manipulation, refining its parameters step-by-step, until it learns to model the underlying patterns in the data effectively.

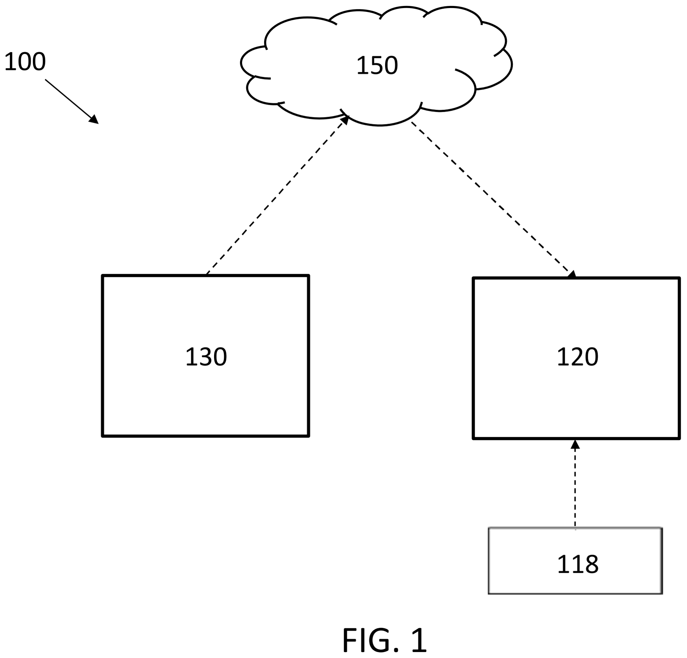

FIG. 1 shows a block diagram of the entire system **100** embodying the disclosure. A central remote system **120** is used to collect and process training data from a cloud computing system 150. In some embodiments, additional training data **118** can also be utilized by the central remote system **120**. The additional training data **118** may be sourced from previous game data, publicly available data, video data, annotator data and so on. Local system **130** streams raw player position data, rink coordinates, etc. to cloud computing system **150** which may process the raw data using mathematical models such as a Kalman filter or a variation thereof.

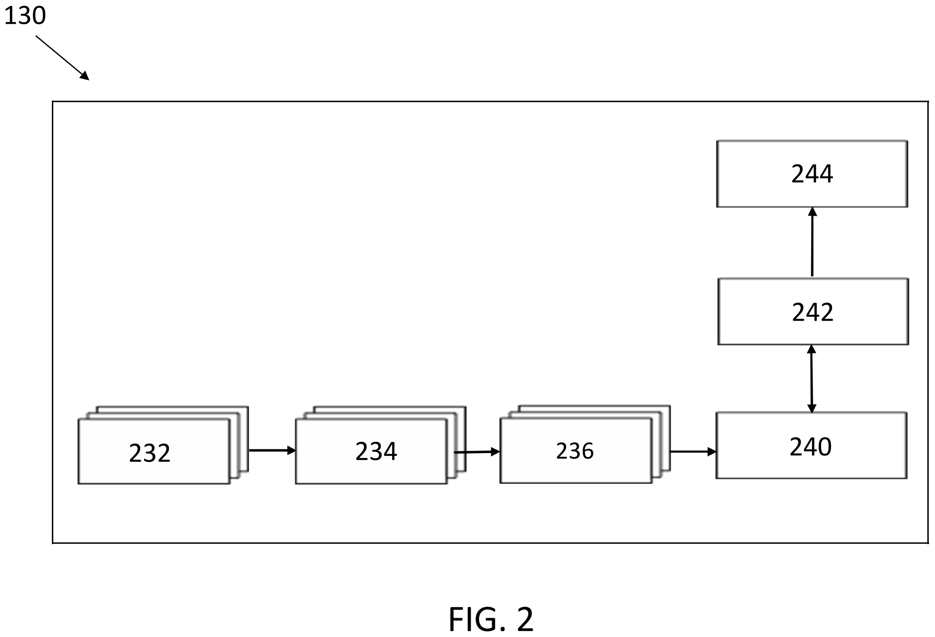

As shown in FIG. 2, local system **130** comprises edge computing device **240** which receives raw data including player positions, time, rink coordinates, player attributes, etc. which are stored in local database **242**. In the preferred embodiment, a plurality of player sensor tags **232** in use during a live sporting event communicates with wireless data transceivers **234** which are used to determine player location using multilateration which can include any standard multilateration technique, including two-way ranging, time difference of arrival, signal strength-based multilateration, phase difference of arrival or angle of arrival to name a few. Using live game data and real-time processing allows the system to output live puck/ball location, which may be valuable to fans watching the game but unable to spot the small projectile. The live projectile location may be overlaid on a video stream of the live game to a display.

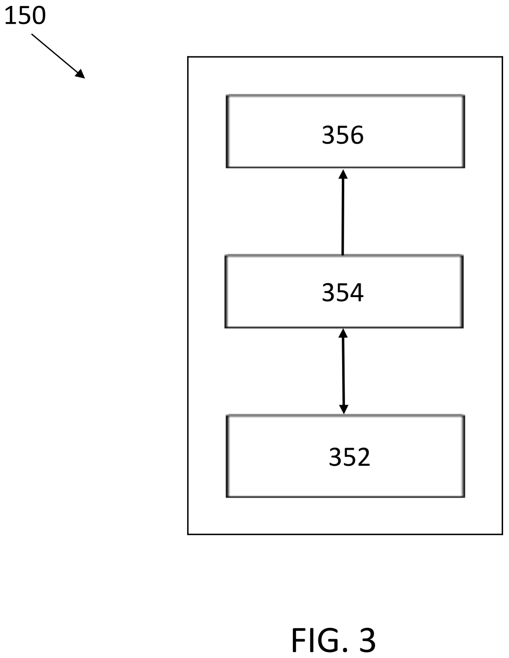

Gateway devices **236** receives the location data of each player sensor tag **232** and transmits the data to edge computing device **240**. The data collected by the local edge computing device **240** is stored in a local database **242** along with a timestamp corresponding to the time the data is received. Following the tracked event, the data collected by the local edge computing device **240** is streamed to the cloud computing device **352** of FIG. 3 using an ethernet or a wireless communication network such as Wi-Fi® for processing.

In some embodiments, each player sensor tag **232** stores location data with timestamps. The data is offloaded to cloud computing system **150** after the tracked event for further processing, thereby minimizing data loss. However, such embodiments would require a player sensor with higher power consumption, more memory capacity and a microcontroller equipped with a clock to produce the timestamps. In some embodiments, the data is streamed directly to a cloud computing system **150** without saving in the local database **242**. Some embodiments of the local system **130** utilize a local user interface **244** to access local data or to configure aspects of the local system **130** such as identifying the location of wireless data transceivers **234**.

In some embodiments, the raw data is standardized by edge computing device **240** to remove anomalies, edge cases, and smooth out the data over a time window prior to uploading the data to cloud computing system **150**. Edge cases can include the projectile leavings the sports area, penalty shots, or uncommon situations that were not part of the training data. Smoothing can be used by the processor to interpolate projectile and player locations when the data were not present or of low confidence score. In this case the projectile's region can be estimated partly based on based on prior and posterior estimates of the projectile regions. In some other embodiments, raw data is uploaded to the cloud computing device **352** of FIG. 3 which then processes the data to create a refined and standardized set of data. As shown in FIG. 3, the refined set of data can be stored in database **354** which may be accessed by user interface **356** via for example a web application or an Application Programming Interface (API). User interface **356** can be, for example, a Graphical User Interface (GUI). In some preferred embodiments, the refined and standardized set of data gets pre-processed by the cloud computing system **150** to create a training dataset (a.k.a. training data). In some embodiments, each of local database **242** and database **354** may be a plurality of databases.

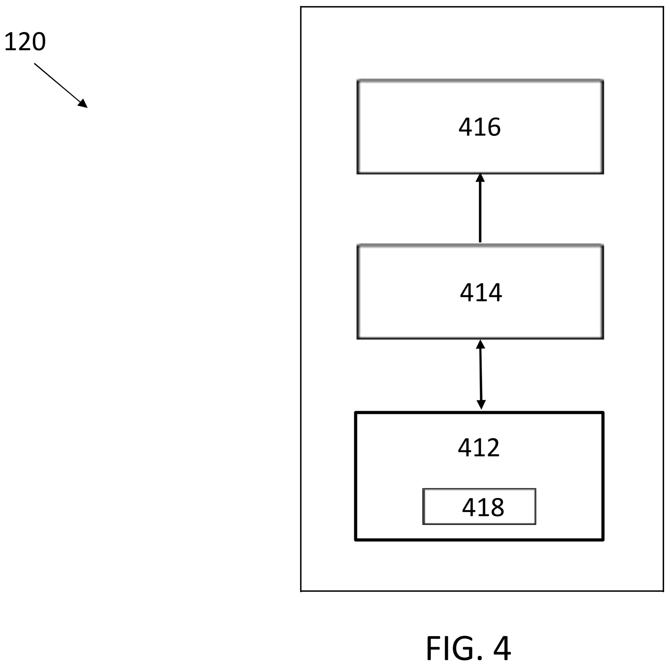

As shown in FIG. 4, central remote system **120** is used to collect and process training data from cloud computing system **150**. In some preferred embodiments, the central remote system **120** is a centralized framework that collects a plurality of training data from a training set stored in the cloud computing system **150** and uses the training data to train a machine learning model.

Central remote system **120** may comprise a central computing device **412,** which is equipped with GPU **418** to receive and process data to train the neural network, a database component **414** consisting of one or more databases and data storage to archive the data and handle data relationships, and a user interface component **416** that allows a user to access the data via for example a web application or an API. User interface **416** can be, for example, a GUI. In some embodiments, a cloud computing system **150** that offers the processing and memory capabilities of, for example, GPU **418** can also be used to train the machine learning model.

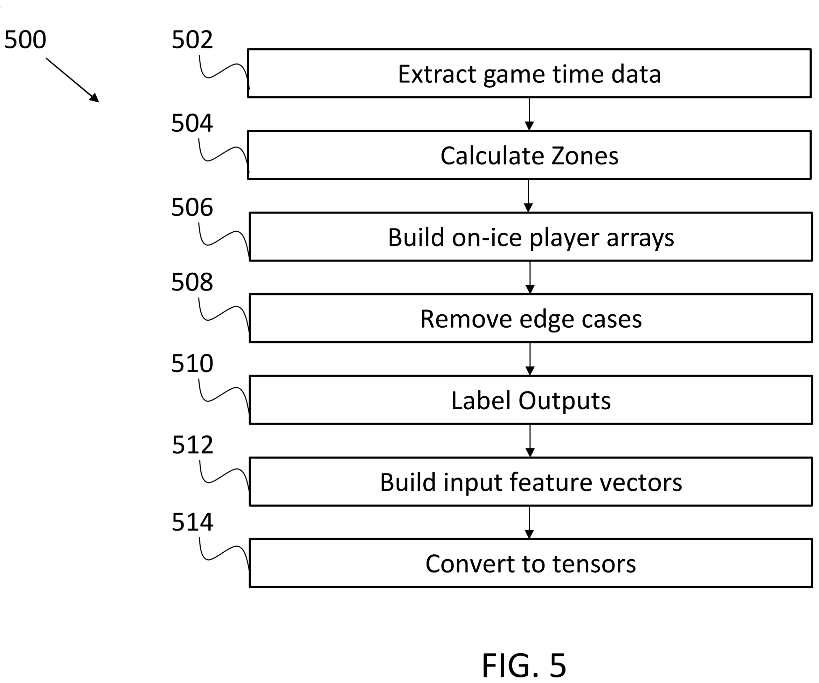

FIG. 5 shows a flow diagram of the pre-processing pipeline **500.** At step **502,** the refined and standardized game time data are extracted by keeping the tracking data pertaining to all on-ice players and puck during active game time. In some embodiments, the data is extracted from a database **354** of cloud computing system **150.** In some other embodiments, the data is extracted from local database **242.**

At step **504,** a zone calculating algorithm is used to assign a zone/region for each player and puck at each timestamp. A person of skill in the art will appreciate that any suitable zone calculating algorithm such as point-in-polygon, Ray Casting algorithm, Winding number algorithm, etc. can be used to assign a zone/region. In some embodiments, a time step can be 0.1 seconds. In some other embodiments, the time step can be adjusted to less or more than 0.1 seconds such as 0.1 to 3 seconds. The time step value is not unique and is therefore adjustable.

At step **506,** on-ice player data arrays are populated by transforming the tracking data indexed by a timestamp and sorted by each player's playing position type (e.g. "F" a.k.a. Forward, "D" a.k.a. Defense and "G" a.k.a. Goalie) and team (e.g. "H" a.k.a. Home or "V" a.k.a. Visitor), such that each row has the same number of players, type, and order. A further aspect of step **506** is storing the puck data in a separate database from the player data.

At step **508,** all rows of data containing player location and puck location with unnatural ordering and size are removed. For example, player location data rows of interest are of size twelve, with six "F", four "D" and two "G" representing the typical number of on-ice players. The number of rows can be adjusted as the play progresses, as there may be more/less than twelve players on ice.

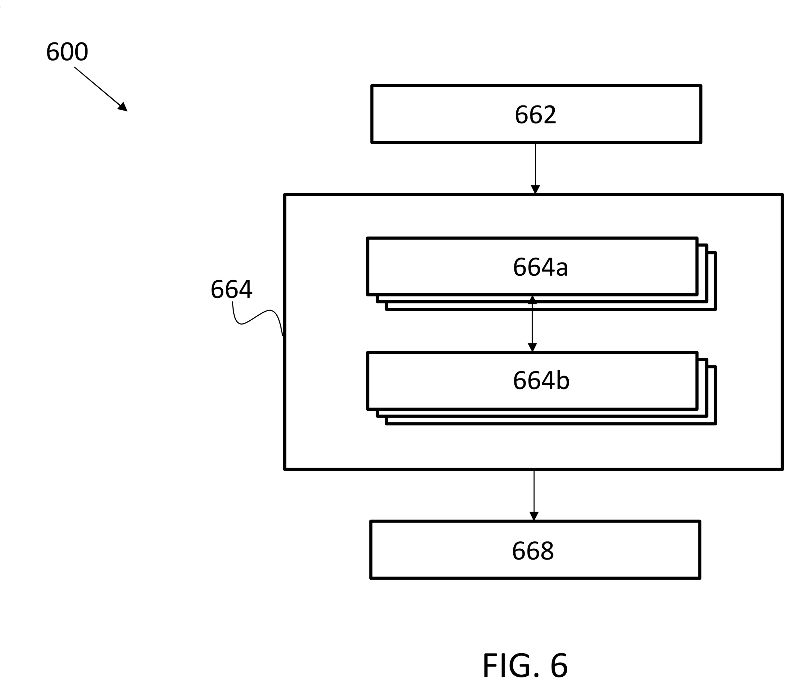

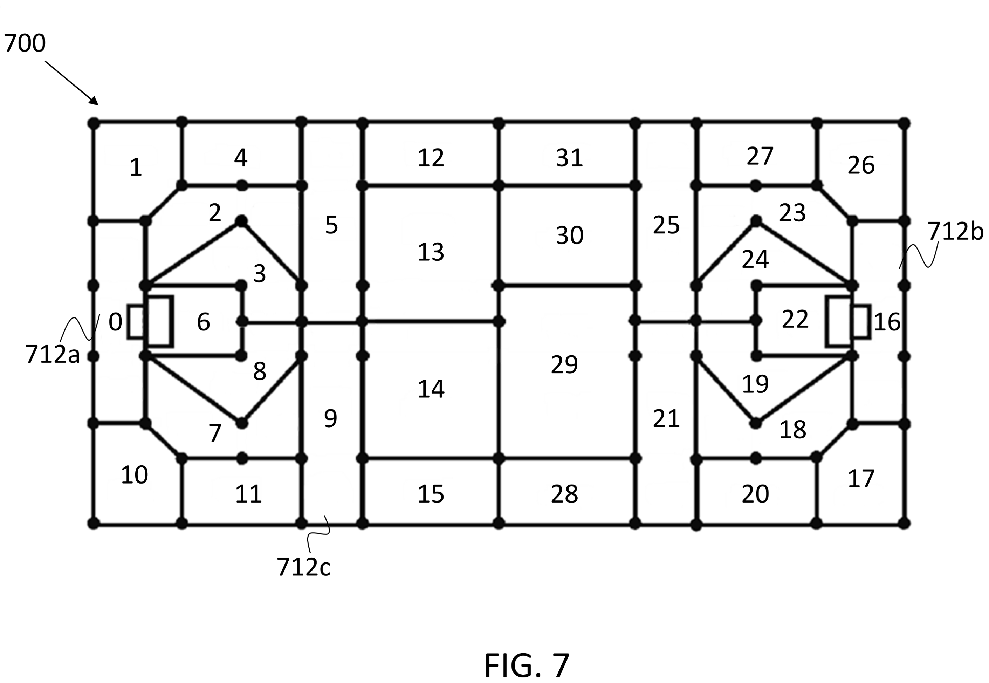

At step **510,** the outputs are labeled by taking into account the puck data and by grouping zones into "N" number of regions shown as the plurality of regions **712** in FIG. 7. The "N" number of regions are considered as the output classes which get streamed as the neural network's input as shown in FIG. 6. The "N" regions can be an adjustable number. For example, "N" can be thirty (30) regions as shown in FIG. 7, or even sixty (60) regions. In some embodiments, "N" can be any suitable user defined number. Therefore, each region's boundaries can be size adjustable. The resolution of puck location improves with number of regions allocated, where the value of higher resolution depends on whether the intention is scouting, coaching, or watching.

At step **512,** input feature vectors are populated by using player tracking data of step **506.** For example, new features such as centroid of player location, speed, variance of player spread, average distance in between players, average player skating direction, projectile possession, and prior / posterior regions can be populated into the input vector for up to approximately ninety-nine (99) inputs per timestamp. A person of skill in the art will appreciate that the total number of input feature vectors can be more or less than the example above. In some embodiments, the input feature vectors are stored as a tabular array of data types.

At step **514,** the tabular array of data types of step **512** (e.g. input feature vectors) are converted into a multidimensional array to be used as training data for a machine learning model. The multidimensional array can provide enhanced capabilities for representing, manipulating, and processing data in a manner that integrates seamlessly with GPU acceleration and parallel processing frameworks. In some preferred embodiments, the tabular array of data is converted into a multidimensional array such as PyTorch® "tensors" to optimize data handling, transformation, and computational efficiency during the training of artificial intelligence models such as a neural network. Other embodiments may use any other suitable multidimensional array such as Python® "Numpy" array, "JAX" arrays, MATLAB® arrays and the like.

The multidimensional array of step **514** is used as the input of a machine learning model such as neural network **600** of FIG. 6. A neural network is composed of "layers", which are the foundations that process data and perform computations to solve a specific task. Each layer consists of one or more "neurons" (or "nodes") that apply a mathematical operation to the input data and pass the result to the next layer. In some preferred embodiments, the neural network **600** can be a Graph Neural Network (GNN) consisting of an input layer **662,** an intermediate layer **664** which includes a plurality of hidden layers **664a** and a plurality of dropout layers **664b** and output layer **668.**

Input layer **662** is the first layer of the neural network, which receives the input data. The multidimensional array of step **514** with the input features of step **512** is represented as an input layer. For example, a multidimensional array of ninety-nine (99) input features would have an input layer where each data point is represented by a vector of ninety-nine (99) features.

The plurality of hidden layers **664a** is in the intermediate layer **664** between the input layer **662** and output layer **668,** where transformations and learning occur. For example, a neural network **600** may have eight (8) hidden layers **664a,** with each of the plurality of hidden layers **664a** configured to have two-hundred and fifty (250) features. Each of the plurality of hidden layers **664a** applies a transformation to the data, for example, a linear operation followed by a non-linear activation function.

Activation functions introduce non-linearity to the neural network **600,** allowing it to model complex relationships in data. Some commonly used activation functions include Rectified Linear Unit (ReLU), Sigmoid and Tanh. Some preferred embodiments of the present disclosure use the ReLU activation function. In some embodiments, the activation function can use a weighted some of inputs. For example, the ReLU activation function can be written as:

$$ReLU(x) = \max(0, x)$$

Where, x is the input data of input layer **662** streamed to the neural network **600** which can be a weighted sum of inputs to the neuron. Typically, each of the plurality of hidden layers **664a** is followed by an activation function.

The plurality of dropout layers **664b** perform a regularization technique that randomly sets a fraction of the neurons to zero during training to prevent overfitting. For example, a dropout rate of 0.5 means 50% of the neurons in the dropout layer are randomly "dropped out" or set to zero during each training iteration. This helps neural network **600** generalize better by forcing the network to rely on different combinations of neurons, rather than overfitting to specific patterns or features in the training data.

In some preferred embodiments, each of the plurality of dropout layers **664b** are interspersed between some of the plurality of hidden layers **664a.** In some embodiments, each of the plurality of hidden layers are applied to fully connected layers or between input-to-hidden or hidden-to-hidden layers. In some other embodiments, dropout layers such the plurality of dropout layers **664b** are applied strategically in layers where overfitting is a concern, and where neurons are densely connected, making them more likely to overfit.

Output layer **668** is the final layer of the neural network, which produces the output of the neural network **600.** The size of the output layer **668** depends on the task (e.g., classification or regression). For a classification task, the size relates to the number of classes which gives a probability value or an array/vector of probabilities, while for regression, it might be a single continuous scalar value or a vector representing the predicted value(s) of continuous variables.

In some preferred embodiments, the output of the neural network is an array of probabilities indicating the probability of locating the puck in each region/zone as shown in FIG. 7. The neural network repeats/reiterates the above steps over the entire dataset which is typically broken into smaller batches of data for a fixed number of passes through the entire dataset (a.k.a. epochs), until it reaches convergence. The zone that corresponds to the highest probability is chosen as the estimated location of the puck at each timestamp.

A person of skill in the art will appreciate that any suitable machine learning model capable of performing a classification task that has a different architecture from the neural network **600** described above can be used to predict the puck location. Therefore, in some embodiments, the machine learning model can include, for example, a Convolutional Neural Network (CNN) or attention-based models.

In some embodiments, the input of a convolutional neural network can include a discretized grid of the playing area (*e.g.* ice rink) where the grid represents "N" number of regions shown as the plurality of regions **712** in FIG. 7. Further, the input may take an array form, similar to an RGB (Red, Green, Blue) image, in the shape of (height, width, channels). The channels can represent the input features where "m" number of channels represents "m" number of input features such as player's team, position, speed, acceleration, etc. The output can be an array of probabilities of size "N". For such machine learning algorithms, the neural network (*i.e.* convolutional neural network), turns the task into an image-like classification task where the neural network will learn from the player formations to classify/determine the location of the puck.

FIG. 7 illustrates an exemplary region/zone map **700** overlaid on a playing area. Region/zone map includes a plurality of regions **712** (*i.e.* "N" regions). As can be seen in FIG. 7, the regions/zones have different dimensions which can be configured as previously explained. Each region is assigned a number/index which corresponds to the index of the array of probabilities. In some embodiments, the output arrays are indexed from zero. Similarly, the reference regions are indexed from zero. Therefore, for example, the seventeenth entry in the output array corresponds to the sixteenth region. As can be seen in FIG.7, number zero (0) is assigned to region **712a,** number sixteen (16) is assigned to region **712b** and number nine (9) is assigned to region **712c.**

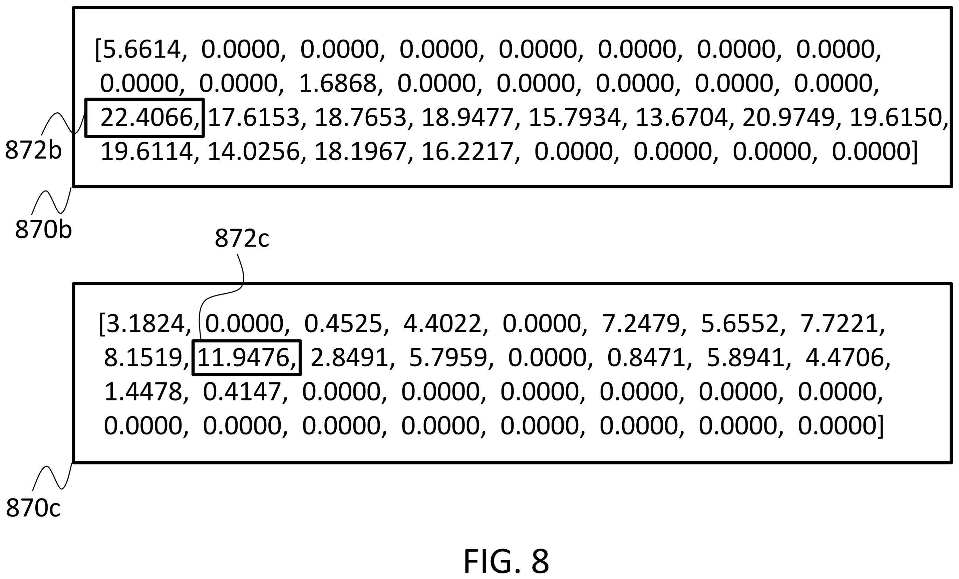

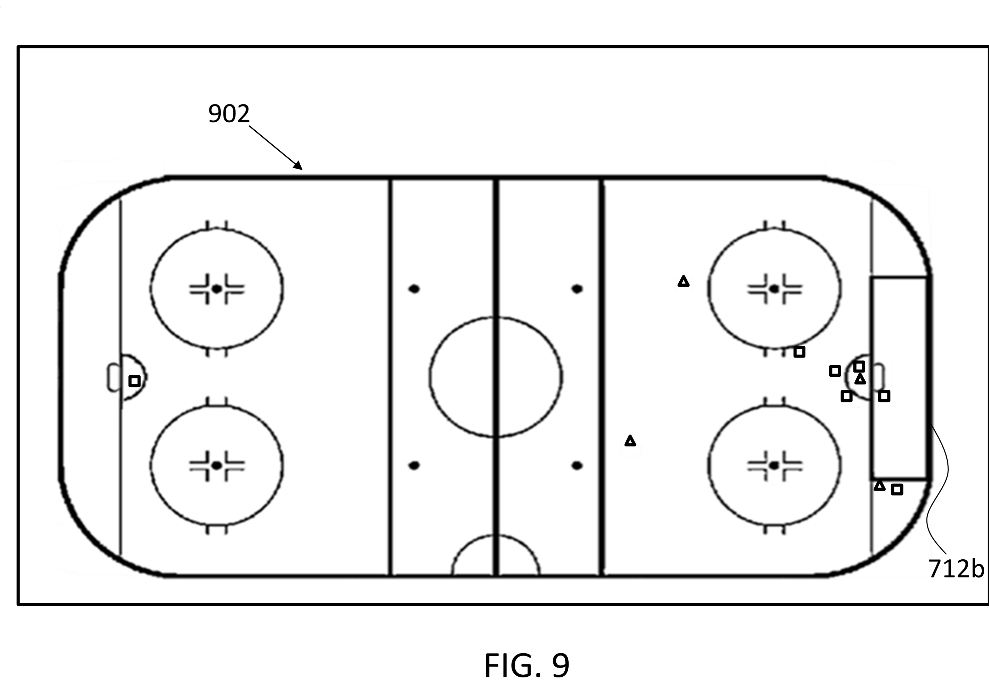

FIG. 8 illustrates a plurality of exemplary output arrays **870** including the probability of the puck being in each region/zone. For purposes of the present disclosure, the plurality of output arrays **870** are indexed from zero in accordance with the region/zone map **700.** Furthermore, each entry is counted from top left corner to the right and down a row. As can be seen in output array **870b,** the highest recorded probability entry **872b** is therefore in index sixteen (16) which corresponds to region **712b** of FIG. 7 and FIG.9. Similarly, the highest recorded probability entry **872c** of output array **870c** is in index nine (9) which corresponds to region **712c** of FIG. 7 and FIG.9.

An outcome of identifying the region of the puck at each timestamp throughout a tracked event is to create a trajectory of the puck. Therefore, the system can track the path of the puck without directly tracking the puck. A person of skill in the art will appreciate that the puck trajectory can be determined by a suitable mathematical algorithm such as interpolation, spline fitting, curve fitting etc. Furthermore, when the trajectory of the players is known, and puck possession is also determined as disclosed here within, a more precise trajectory of the puck can be determined through the use of the players' actual trajectory.

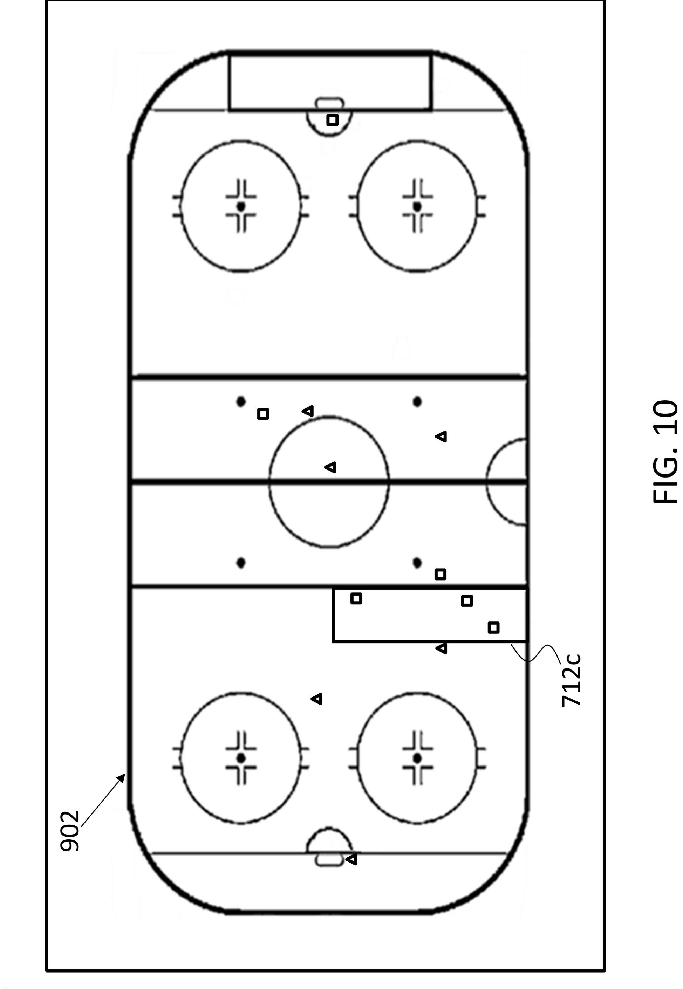

FIG. 9 and FIG.10 show the player positions of two teams where the square symbols represent the positions of home team players and the triangles represent the positions of the away team players overlaid on playing area **902** at two different timestamps. In some embodiments, the player location data are extracted from the refined and standardized data pertaining to the specific tracked event. As previously explained, the refined data can be obtained by processing the raw location data of player sensor tags **232** by cloud computing device **352** or edge computing device **240.**

In order to determine puck possession, the system initially needs to identify which region the puck is in. This can be taken from the output array of neural network **600.** By using player position data such as the refined and standardized data pertaining to the same timestamp, the system is able to identify which players are in the same region by overlapping the puck region with player position data. Using this data, several logical assumptions can be made based on game rules. Puck possession can therefore be determined on a team and player level. In some embodiments, the assumptions may include: 1. If a single team of players are in that region, then that team has possession; 2. A player has possession if a single player is in the same region as the puck; 3. If two different teams are in the same region as the puck it is considered as contention; 4. If no players are in the same region as the puck, it is classified as "unknown".

The positional data of the players at each timestamp along with the puck region data can be used to identify which player/team is in possession or in the vicinity of the puck. For example, there are three players all on the home team that are in region **712c** of FIG. 10 which the system identified as the region of the puck. Therefore, one can observe that the home team is in possession of the puck at that timestamp. Furthermore, there is one player on the home team that is in region **712b** of FIG. 9 which can indicate that that player is in possession of the puck at that timestamp.

In the case where more than one zone has the same highest probability where the two regions are adjacent, the two regions may be merged into one. In other cases where the two regions are not adjacent to each other and where there is a high error rate or ambiguity, the correct region of the puck may still be found by combining a few other methods. In some embodiments, such methods may include one or a combination of annotator data, video data or the use of another machine learning algorithm to identify which player has the puck at each timestamp.

Some embodiments can employ a certain radius range to determine which team or player has the puck (e.g. 1-2m radius range). A person of skill in the art will appreciate that the radius range can be adjusted (e.g. smaller or larger than 1-2m) depending on the game scenario.

As previously explained, the region of the puck at each timestamp can be obtained with greater accuracy by applying the puck region data and player position data to another machine learning model which is used to determine which player is in possession of the puck. In some embodiments, any missing data can also be filled in with other data sources such as annotator data (e.g. commentary on who is in possession of the puck and who they passed the puck to), video data, previous game and training data, stick data as described in U.S Patent No. 11,998,803B2, to increase the accuracy of the output.

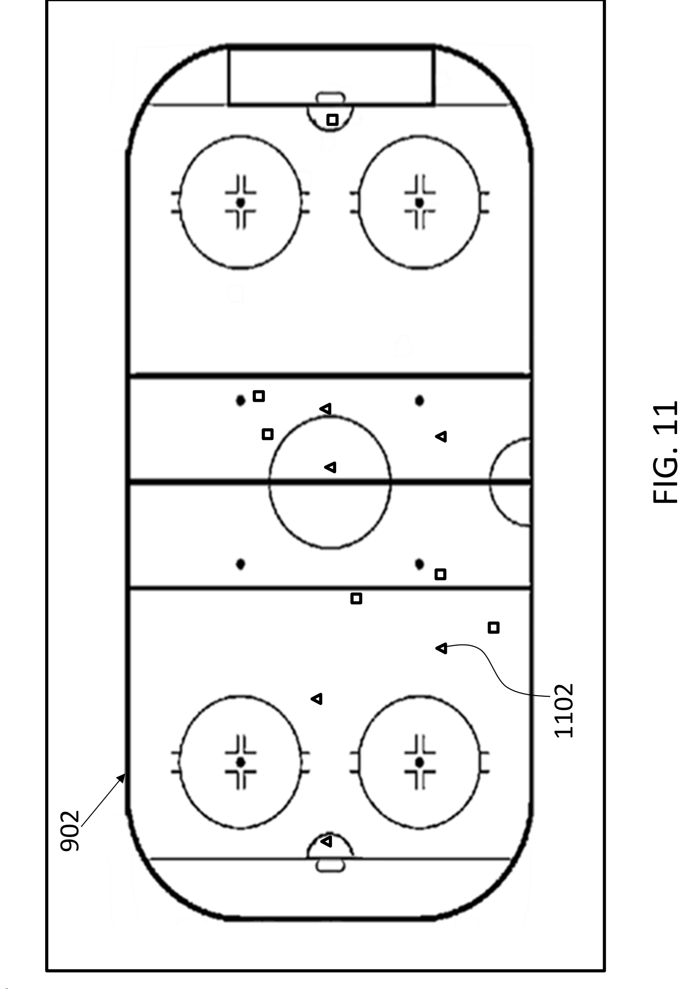

The outputs of the plurality of machine learning models can also be used to train the same and to more accurately predict the region of the puck as well as its possession. Therefore, another outcome of identifying the region of the puck is to determine puck possession as outlined in FIG.11 where player **1102** is identified as having possession of the puck.

By identifying which player in possession of the puck at each timestamp, certain measurements can be calculated for each player with the puck to quantify player performance/skill, player tendencies, trend analysis, passes, game events, etc. The system preferably calculates statistics from the estimated regions, potentially for a articular window of time or over the whole game. Various statistics and inforgraphics may be created, as known by the skilled person, such as a heat map of estimated regions, projectile dynamics, trends of the sports projection's regions over the window or game, and correlations between estimated regions and sporting outcomes.

Furthermore, the puck possession data and puck region data can be used to more accurately predict the location of the puck which can then be used to determine the trajectory of the puck. By accurately predicting the puck location at each timestamp, an entire game can be recreated. Such a system can be used for coaching feedback of all levels of hockey, game replay, player performance analysis when in possession of the puck and so on.

PLAYER LOCATION

Embodiments may comprise specific types of sensors to accurately track the location of players over time during a live sporting event. A network of rink antennas captures the sensor data and transfers the data to a computing device that processes the data using mathematical algorithms and outputs a set of refined/improved set of location data at any given timestamp. These refined location data along with other game time data are further processed to convert them into training data that can be used by a neural network to determine the region of puck location.

The raw sensor data is refined and standardized by filling in missing data points using mathematical algorithms to have larger set of equally-spaced data points for each player at a given timestamp. The data is converted into a refined x, y location data set by applying a mathematical algorithm. In some embodiments, the mathematical algorithm can be a Kalman filter or a deviation thereof.

KALMAN FILTER

A Kalman filter is a mathematical algorithm used for estimating the state of a dynamic system from a series of incomplete and noisy measurements. It operates in two main steps: prediction and update.

Prediction: The filter uses the current state of the system and a mathematical model to predict the next state. It also estimates the uncertainty in this prediction.

Update: When new measurements become available, the filter updates its predictions based on these observations, taking into account the noise and uncertainty in the measurements. It combines the predicted state with the new measurements to produce a more accurate estimate.

A Kalman filter can estimate acceleration from the positions of players over time by modeling the system's dynamics and applying recursive estimation techniques. The Kalman filter processes noisy position measurements to infer the hidden variables, such as velocity and acceleration, by utilizing a state-space model that includes the relationships between position, velocity, and acceleration. To determine acceleration, the filter processes sequential measurements of player positions, estimating their velocities based on the difference in positions over time. By further differentiating the velocity, the filter can derive acceleration, allowing it to effectively smooth out noise and provide the ultimate estimation of players' motion.

A state model or a state-space model is a mathematical framework used to describe the behavior of a dynamic system by defining its current status, or state, in terms of relevant variables such as position, velocity, and acceleration. The model typically consists of two key elements: state transition model, which predicts how the system evolves over time based on its previous state, and an observation model or a measurement model, which relates the system's state to measurable outputs (e.g., sensor readings). The state model allows for the estimation of hidden variables and future states, often under conditions of uncertainty, using techniques like Kalman filters or particle filters and the like. For example, the Kalman filter can determine refined position from position measurements by the following steps:

## State-Space Model

The system's initial state can be defined to include position, velocity, and acceleration. In some embodiments including two-dimensional motion (e.g., along the x-y axes), the state vector $P$ can also be known as the initial state covariance matrix $P$. For example, the state vector $P$ can be written as:

$$P = \begin{bmatrix} x & y & v_x & v_y & a_x & a_y \end{bmatrix}$$

where x and y are the positions of the player, $v_x$ and $v_y$ are the velocities and $a_x$ and $a_y$ are the accelerations in the x and y directions. In some embodiments, Matrix $P$ defines the errors between the different parameters in the initial state estimates.

## State Transition Model

The state transition model predicts the next state based on the current state. Assuming constant velocity motion, in some embodiments, the state transition matrix $Q$ can also be known as the transition state covariance matrix $Q$. For example, the state transition matrix $Q$ can be written as:

$$Q = \begin{bmatrix} 1 & \Delta_t & 0 & 0 & 0 & 1 & 0 & 0 & 0 & 0 & 1 & \Delta_t & 0 & 0 & 0 & 1 \end{bmatrix}$$

Where $\Delta_t$ is the time step between measurements. This matrix assumes that position changes based on velocity over time. In some embodiments, the basic form of the state update is a vector/matrix product including summation. For example, at time k, the state vector $x_k$ can be written as:

$$x_k = Q x_{k-1} + w_{k-1}$$

Where $Q$ is the state transition matrix, $x_{k-1}$ is the state vector at the previous time step and $w_{k-1}$ is the process noise. In some embodiments, matrix $Q$ defines the errors between the same state parameters within each time step, due to, for example, noise in the system.

## Measurement Model

The measurement model defines how the actual state vector is mapped to the measurements that can be observed. It can help the filter update its state estimate based on new information received from sensors or other data sources. In some embodiments, the measurement model can be expressed as a vector/matrix product including summation. For example, at time k, the measurement vector $z_k$ can be written as:

$$z_k = R x_k + v_k$$

Where $R$ is the measurement noise/error matrix (a.k.a. observation covariance matrix), $x_k$ is the state vector at time $k$ and $v_k$ is the measurement error at state $k$. For example, the measurement noise/error matrix can be written as:

$$R = \begin{bmatrix} 0.5^2 & 0 & 0 & 0.5^2 \end{bmatrix}$$

Where 0.5 represents the maximum error in the measurement device in the $x$ and $y$ coordinates.

The measurement model can be further expressed by a vector/matrix product including summation. For example, the next state $x_{k+1}$ can be written as:

$$x_{k+1} = F x_k + w z_k = H x_k + v_k$$

where $x_k$ is the current state. In the above equation, the next state $x_{k+1}$ is modelled by the current state at $k$ moved by a process defined by *F* and some noise *w.* Since no system follows a mathematical model perfectly, the noise *w* is added to the equation. Similarly, since no measurement is perfect, some error $v_k$ is added.

In the above equation, *F* is the state process which describes how the system evolves over time. For example, the state process *F* can be written as:

$$F = \begin{bmatrix} 1 & dt & 0.5(dt)^2 & 0 & 0 & 0 \\ 0 & 1 & dt & 0 & 0 & 0 \\ 0 & 0 & 1 & 0 & 0 & 0 \\ 0 & 0 & 0 & 1 & dt & 0.5(dt)^2 \\ 0 & 0 & 0 & 0 & 1 & dt \\ 0 & 0 & 0 & 0 & 0 & 1 \end{bmatrix}$$

where *dt* is the difference in time between state *k* and *k* + 1. These values can be derived from existing kinematic equations.

**Prediction and Update Steps**

The Kalman filter operates in two phases: Prediction and Update; Prediction: Based on the previous state estimate, the Kalman filter predicts the next state (position, velocity, and acceleration) using the state transition model. Update: The filter then corrects its predictions using the observed position or measurement model and Kalman gain, which determines how much to adjust the state estimate based on the new measurement and which optimally combines the predicted state and the measurement, taking uncertainties into account.

**Recursive Estimation of Acceleration**

At each time step, the Kalman filter predicts the player's position, velocity, and acceleration based on the previous estimates and the state transition model and updates these predictions using the new position measurement.

**Claims**

1. A method of estimating a sports projectile's location in a sports field comprising:

     logically dividing the sports field into multiple regions;
     track player locations within the sports field;
     calculate a set of features based on player locations;
     using a neural network, input with the set of features, to calculating probabilities of the sports projectile being located within each of the regions;
     estimating one of the regions as containing the projectile based on the calculated probabilities;

and
repeating the steps of calculating probabilities and estimating regions and then storing estimated regions in a datastore for a series of timestamps.

2. The method of claim 1, further comprising preprocessing steps including one or more of: refining players' locations using a Kalman filter, calculating players' speeds and trajectories, building player arrays, removing edge cases of potential regions, labeling sporting outcomes, and building input feature vectors.

3. The method of claim 1, further comprising converting features to a multidimensional tensor, which is input to the machine learning model, preferably wherein features are based on player distances and speeds, and selected from: centroid of player location, player speed, variance of player spread, average distance between players, average player skating trajectory.

4. The method of claim 1, further comprising neural network is a GNN, CNN, or attention-based model.

5. The method of claim 1, further comprising outputting the estimated region of the sports projectile to a display.

6. The method of claim 1, wherein there are at least 30 regions.

7. The method of claim 1, wherein the region of the sports projectile for a given timestamp are further calculated based on prior and posterior estimated regions.

8. The method of claim 1, further comprising a trajectory of the sports projectile by fitting lines or splines though the estimated regions for series of the timestamps.

9. The method of claim 1, further comprising determining which player or team has possession of the sports projectile and using possession as one of the features to the neural net.

10. The method of claim 1, further comprising calculating statistics from the repeated estimated regions, preferably one of: heat map of estimated regions, projectile dynamics, trends of the sports projection's regions over the course of a game, correlations between estimated regions and outcomes.

11. The method of claim 1, wherein the size of the regions decreases with distance to a goal of the sports area.

**12.** The method of claim 1, wherein the regions are stored in a datastore or configured using a User-Interface.

**13.** A system for estimating a sports projectile's location in a sports field comprising:

a tracking system to track player locations within the sports field;
a datastore storing a logical division of the sports field into multiple regions;
a neural network trained to output probabilities of a sports projectile being located within each of the regions given a set of input features;
a computer processor arranged to:

calculate a set of features based on player locations;
input the set of features to the neural network to calculate probabilities of the sports projectile being located within each of the regions;
estimate one of the regions as containing the sports projectile based on the calculated probabilities; and
repeat the steps of calculating probabilities and estimating regions, then store estimated regions for a series of timestamps.

**14.** The system of claim 13, wherein tracking comprises using a video camera capturing the athletes to output a video stream and then a) video processing to automatically identify each player and estimate their locations or b) manually annotating players and their locations.

**15.** The system of claim 13, wherein tracking comprises sensors and transceivers worn by each athlete.

100

150

120

118

130

FIG. 1

FIG. 2

150

356

354

352

FIG. 3

120

FIG. 4

500

- 502 — Extract game time data
- 504 — Calculate Zones
- 506 — Build on-ice player arrays
- 508 — Remove edge cases
- 510 — Label Outputs
- 512 — Build input feature vectors
- 514 — Convert to tensors

**FIG. 5**

EP 4 769 335 A1

600

FIG. 6

FIG. 7

EP 4 769 335 A1

872b

[5.6614, 0.0000, 0.0000, 0.0000, 0.0000, 0.0000, 0.0000, 0.0000, 0.0000, 0.0000, 1.6868, 0.0000, 0.0000, 0.0000, 0.0000, 0.0000, 22.4066, 17.6153, 18.7653, 18.9477, 15.7934, 13.6704, 20.9749, 19.6150, 19.6114, 14.0256, 18.1967, 16.2217, 0.0000, 0.0000, 0.0000, 0.0000]

870b

872c

870c

[3.1824, 0.0000, 0.4525, 4.4022, 0.0000, 7.2479, 5.6552, 7.7221, 8.1519, 11.9476, 2.8491, 5.7959, 0.0000, 0.8471, 5.8941, 4.4706, 1.4478, 0.4147, 0.0000, 0.0000, 0.0000, 0.0000, 0.0000, 0.0000, 0.0000, 0.0000, 0.0000, 0.0000, 0.0000, 0.0000, 0.0000, 0.0000]

FIG. 8

EP 4 769 335 A1

FIG. 9

EP 4 769 335 A1

FIG. 10

FIG. 11

Europäisches
Patentamt

European
Patent Office

Office européen
des brevets

# EUROPEAN SEARCH REPORT

**Application Number**

EP 25 22 7807

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Vats Kanav ET AL: "Puck localization and multi-task event recognition in broadcast hockey videos", arXiv.org, 1 May 2021 (2021-05-01), XP093397917, Retrieved from the Internet: URL:http://www.google.com | 1-8,10, 12-14 | INV. G06V10/82 G06V20/40 G06V40/20 |
| Y | * abstract ; 4.1.2 ; 3.2.4 ; 3.2.2 ; | 9,15 | |
| A | Table 1 ; 3.2.3 ; 3.2.5 ; Table 2 ; 4.1.1 ; 4.1.3 ; 2.1 ; 3.2.1 ; 5.3 ; 1 ; Fig. 1 ; 3.3 ; 3.2 ; 3.1; figures 6,8-9 * | 11 | |
| Y | NORIHIRO ISHII ET AL: "3D Tracking of a Soccer Ball Using Two Synchronized Cameras", 11 December 2007 (2007-12-11), ADVANCES IN MULTIMEDIA INFORMATION PROCESSING - PCM 2007; [LECTURE NOTES IN COMPUTER SCIENCE;;] SPRINGER BERLIN HEIDELBERG, BERLIN, HEIDELBERG, PAGE(S) 196 - 205, XP019085498, ISSN: 0302-9743 ISBN: 9783540772545 * 3 * | 9 | |
| A | AMIRLI ANAR ET AL: "Prediction of the Ball Location on the 2D Plane in Football Using Optical Tracking Data", ACADEMIC PLATFORM JOURNAL OF ENGINEERING AND SMART SYSTEMS, vol. 10, no. 1, 1 January 2022 (2022-01-01), pages 1-8, XP093397914, ISSN: 2822-2385, DOI: 10.21541/apjess.1060725 | 1 | |

TECHNICAL FIELDS SEARCHED (IPC)

G06V

-----

-----

-/--

The present search report has been drawn up for all claims

| Place of search | Date of completion of the search | Examiner |
|---|---|---|
| The Hague | 13 May 2026 | Versluis, Anton |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

**page 1 of 2**

| | Europäisches Patentamt European Patent Office Office européen des brevets | **EUROPEAN SEARCH REPORT** | **Application Number** EP 25 22 7807 |
| --- | --- | --- | --- |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| A | Nirvin Gustav: "Ball Tracking in Association Football -Leveraging Player Detections to Locate the Ball Using Graph Attention Networks", , 3 September 2024 (2024-09-03), XP093397923, Retrieved from the Internet: URL:http://www.google.com ----- | 1 | |
| A | Gongora Lucas Queiroz ET AL: "Estimating Football Position from Context LUCAS QUEIROZ GONGORA KTH ROYAL INSTITUTE OF TECHNOLOGY SCHOOL OF ELECTRICAL ENGINEERING AND COMPUTER SCIENCE", , 21 August 2021 (2021-08-21), XP093397919, Retrieved from the Internet: URL:http://www.google.com ----- | 1 | |
| Y | Kim Hyunsung ET AL: "Ball Trajectory Inference from Multi-Agent Sports Contexts Using Set Transformer and Hierarchical Bi-LSTM", arXiv.org, 1 June 2023 (2023-06-01), XP093397918, DOI: 10.48550/arxiv.2306.08206 Retrieved from the Internet: URL:http://www.google.com * 4.1 * ----- | 15 | **TECHNICAL FIELDS SEARCHED (IPC)** |
| A | WO 2023/283716 A1 (SPORTLOGIQ INC [CA]) 19 January 2023 (2023-01-19) ----- | 1 | |

The present search report has been drawn up for all claims

| Place of search | Date of completion of the search | Examiner |
| --- | --- | --- |
| The Hague | 13 May 2026 | Versluis, Anton |

EPO FORM 1503 03.82 (P04C01)

## ANNEX TO THE EUROPEAN SEARCH REPORT
## ON EUROPEAN PATENT APPLICATION NO.

EP 25 22 7807

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2026

| Patent document cited in search report | Publication date | Patent family member(s) | Publication date |
|---|---|---|---|
| WO 2023283716 A1 | 19-01-2023 | CA 3221489 A1 | 19-01-2023 |
| | | EP 4371056 A1 | 22-05-2024 |
| | | US 2024119606 A1 | 11-04-2024 |
| | | WO 2023283716 A1 | 19-01-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2023283716 A1
- US 10956723 B2
- US 11998803 B2